# FASCICULE DE BREVET EUROPEEN

(11) **EP 3 978 333 B1**
(45) Date de publication et mention de la délivrance du brevet: **16.08.2023**
(21) Numéro de dépôt: 20290070.0
(22) Date de dépôt: 05.10.2020
(51) Int. Cl.: B62B 3/02, B62B 3/10

(54) **CHARIOT DE MANUTENTION A DEPLACEMENT MANUEL**
MANUELL BEDIENBARER FÖRDERWAGEN
HANDLING CART WITH MANUAL MOVEMENT

(43) Date de publication de la demande: 06.04.2022
(73) Titulaire: MACC, 86104 Chatellerault Cedex (FR)
(72) Inventeur: Cupif, Bertrand, 86104 Châtellerault Cedex (FR); Souriau, Jérémy, 86104 Châtellerault Cedex (FR)

(56) Documents cités:
- EP-A1- 3 312 074
- US-A- 2 180 642
- US-B1- 8 641 061

## Description

L'invention concerne un chariot de manutention apte à être déplacé manuellement pour porter et transporter des charges, notamment des charges oblongues telles que des plaques, des panneaux, des huisseries de menuiserie, des poutres, etc.

Dans le bâtiment, les artisans ont besoin de transporter sans effort des charges telles que des plaques de plâtre, des panneaux, des portes, des fenêtres. Un chariot du type connu, très simple de conception, comporte, d'une part, une surface de support inférieure horizontale, se présentant sous la forme d'un cadre métallique auquel sont associées deux roues, et d'autre part, une ridelle à claire-voie s'étendant verticalement, perpendiculairement à la surface de support. Le bord supérieur de la ridelle est doté en ses deux extrémités libres, de deux poignées opposées qui peuvent être télescopiques de façon à agrandir la longueur dudit bord supérieur de la ridelle afin d'appuyer des objets de grandes dimensions. De plus, le cadre support inférieur comprend un rebord qui est opposé à la ridelle et sert à caler/retenir en partie inférieure les panneaux qui sont destinés à être agencés de manière inclinée en s'appuyant contre la ridelle.

Si un tel chariot est très pratique d'utilisation, il s'avère encombrant sur un chantier, et n'est pas pratique de rangement. De plus, de par son encombrement, il est pénible à soulever et à manipuler, en particulier lorsqu'il s'agit de le charger et le décharger d'une camionnette pour être utilisé sur un chantier. Par ailleurs, dans un véhicule, il occupe un volume conséquent ne permettant pas d'obtenir un gain de place utile. De plus, on connaît de la demande de brevet européen EP3312074, un chariot de manutention qui est pliable et dépliable ; le chariot comporte un cadre, deux parois opposées verticales et une plateforme relevable à la verticale par pivotement par rapport au cadre, le cadre comprenant deux sous-parties à charnières se pliant en V vers l'intérieur du cadre de sorte à permettre à la plateforme de se relever et aux parois verticales de se plaquer l'une contre l'autre.

L'invention a donc pour but de proposer un chariot qui pallie les inconvénients précités, en étant compact hors utilisation, aisément manipulable, facile et rapide de mise en oeuvre, tout en restant fonctionnel lors de son emploi.

Selon l'invention, le chariot de manutention apte à être déplacé manuellement, en particulier conçu pour le transport de charges allongées telles que des charges sous la forme de plaques, comporte un cadre inférieur de support, des roues, et au moins une ridelle ou un pupitre droit (s'étendant perpendiculairement vers le haut par rapport au cadre de support), et est conforme à la revendication 1.

On entend par « plaques » dans la suite de la description, tout corps à trois dimensions présentant une épaisseur moindre par rapport à sa longueur et/ou sa largeur.

Vis-à-vis du cadre, on parle indifféremment d'état replié ou de position repliée, comme d'état déployée ou de position déployée.

Le cadre du chariot comporte des profilés qui sont assemblés entre eux pour délimiter le contour dudit cadre, et sont articulés pour assurer le pliage et le dépliage. De préférence, les profilés sont creux pour alléger le chariot.

En l'état replié, le cadre qui présente une forme longiligne, est transformé en un longeron (pourvu des roues) qui s'étend longitudinalement en-dessous de la ridelle, en dépassant légèrement de celle-ci. Le longeron est coplanaire avec la ridelle. Le cadre replié n'a donc plus l'allure d'un cadre, mais celle d'un longeron, et ne présente donc plus une extension surfacique.

Ainsi, dans l'état replié du cadre, le chariot adopte une position dite rangée, lui conférant un volume très compact en épaisseur. Le chariot s'étend principalement en hauteur depuis les roues jusqu'au bord d'extrémité supérieure de la ridelle, et en longueur, en dépassant un peu (des bords latéraux) de la ridelle. L'épaisseur du chariot se réduit à la largeur de deux profilés opposés constituant les côtés du cadre, et mis en contact l'un contre l'autre.

Le chariot de l'invention en position rangée n'occupe donc que très peu de place. A titre d'exemple, le chariot n'excède pas 15 cm d'épaisseur en position rangée. Par conséquent, il présente l'avantage d'être extrêmement peu encombrant, peut être aisément logé et rangé dans un véhicule sans occuper inutilement de place.

En outre, le chariot est facilement pris en main, manipulable et peut être déplacé en roulant dans son état rangé.

Enfin, le chariot est simple et rapide de mise en oeuvre quant à au pliage et au déploiement du cadre, sans nécessiter d'outil. Selon une caractéristique, le cadre est d'une part, repliable sur lui-même pour transformer le chariot en position de rangement, et d'autre part, dépliable pour permettre son utilisation, à chaque fois en une unique opération de mise en oeuvre. Il suffit de pousser sur deux côtés/profilés opposés du cadre afin de le plier, et de tirer sur ces côtés pour le déployer à nouveau. Une seule manoeuvre est nécessaire pour mettre le chariot de sa position déployée à sa position rangée, et inversement. L'opération est simple et rapide, et ne nécessite aucun accessoire ou outil de mise en oeuvre.

Selon une caractéristique, le cadre comporte des profilés assemblés entre eux pour délimiter le contour du cadre, chaque profilé étant articulé par rapport à deux profilés adjacents pour assurer le pliage et le dépliage, et les profilés, à l'état replié du cadre, sont parallèles et en contact les uns contre les autres.

Selon l'invention, le cadre comporte quatre profilés formant quatre côtés et un parallélépipède à angles droits, et est repliable sur lui-même de sorte qu'en position repliée, chaque paire de deux profilés adjacents agencés en L à l'état déplié du cadre, présente ses deux profilés qui sont alignés en position repliée du cadre et sont parallèles et en contact des deux autres profilés alignés de l'autre paire de profilés.

Dans le mode de réalisation préféré, le cadre est de forme polygonale et comporte des moyens d'articulation en chacun des angles de deux côtés consécutifs. En particulier, les moyens d'articulation sont des moyens d'articulation par pivotement autour d'axes de direction orthogonale au plan d'extension du cadre.

Selon une autre caractéristique de l'invention, la ridelle est solidaire du cadre en étant agencée selon un plan médian du cadre dans la position déployée de ce dernier. De préférence, la ridelle est à claire-voie.

La ridelle comporte deux montants opposés qui s'étendent orthogonalement au plan du cadre, et sont fixés au cadre en étant chacun apte à tourner dans son plan d'extension (plan vertical) et autour d'un point de rotation solidaire du cadre. Cette configuration permet de replier le cadre sans démontage de la ridelle.

La ridelle comporte deux montants espacés et une traverse supérieure, qui sont fixes (inamovibles) les uns par rapport aux autres. En variante, les montants et la traverse peuvent être démontables entre eux et/ou par rapport au cadre, pour rendre encore plus compact le chariot.

De préférence, le chariot de manutention comporte au moins un plateau qui est apte à obturer au moins en partie le cadre (dans sa position déployée). Le plateau permet si besoin de fournir une surface pleine de support pour porter des charges qui seraient notamment moins longues que le cadre. En position horizontale du plateau posé sur le cadre, celui-ci n'obture que la moitié de la surface du cadre. En variante, le chariot peut comprendre deux plateaux qui peuvent obturer la totalité du cadre. Par ailleurs, le chariot ne pourrait comprendre qu'un seul plateau qui serait constitué de plusieurs volets pliables/dépliables pour recouvrir une surface souhaitée du cadre (toute la surface ou une partie de la surface).

Avantageusement, le plateau est articulé par deux charnières fixées à la ridelle et est apte à être rabattu (verticalement) parallèlement et contre la ridelle, la ridelle comportant un système de maintien du plateau en position rabattue contre la ridelle.

Le plateau est de préférence articulé mais pourrait être articulé et/ou amovible.

De préférence, le plateau comporte un évidement de préhension pour faciliter sa prise en main et assurer son rabattement contre la ridelle ou sa dépose sur le cadre.

Selon encore une autre caractéristique, la ridelle comporte (au niveau de son extrémité supérieure) des moyens de préhension pour la manoeuvre du chariot, tels qu'au moins une poignée de manoeuvre qui peut être réversible et/ou télescopique. Cette poignée, avantageusement ergonomique, facilite la mobilité du chariot.

Avantageusement, le cadre comporte des moyens de calage (au moins sur l'un de ses côtés) parallèlement au plan de la ridelle et à l'opposé de celle-ci. Les moyens de calage sont destinés à caler les produits destinés à être transportés. Cela permet par exemple de caler des plaques à transporter en les agençant à l'oblique, en appui contre la ridelle, et à l'opposé, en butée contre les moyens de calage.

De préférence, le cadre comporte des moyens de verrouillage pour le maintenir en position repliée, en particulier les moyens de verrouillage comportent au moins un pion agencé à l'intérieur du cadre, et au moins un orifice doté d'un élément élastique de clipsage/déclipsage pour coopérer avec le pion, l'orifice étant situé à l'intérieur du cadre de manière adaptée pour sa coopération avec le pion dans la position repliée du cadre et donc de mise en contact des côtés.

De préférence, le chariot de manutention comporte des moyens de butée pour arrêter le cadre dans une ouverture de déploiement appropriée à l'utilisation, c'est-à-dire une ouverture à 90° entre les profilés (à angle droit entre les profilés, sans dépasser l'angle de 90°). Ces moyens de butée sont par exemple une pastille en caoutchouc disposée en l'extrémité de l'un des profilés et qui coopère en interface avec le profilé adjacent lors de l'ouverture maximale du cadre.

Par ailleurs, le chariot comporte des moyens de verrouillage ou blocage pour bloquer le cadre en position déployée de sorte à éviter son repliage involontaire. En particulier, lesdits moyens de blocage comportent une équerre ou un plat soudé s'étendant perpendiculairement au plan du cadre et perpendiculairement à la direction longitudinale du cadre (parallèlement à l'un des petits côtés du plateau qui est perpendiculaire au côté d'extension longitudinale du plateau), l'équerre étant apte à coopérer par butée avec le plateau en position rabattue du plateau lors d'une tentative de repliage du cadre alors que le plateau est rabattu. Ainsi, une fois le plateau rabattu, le cadre ne peut pas pivoter car sinon l'équerre vient en contact contre le plateau rabattu qui forme alors naturellement un verrou. La hauteur de l'équerre est inférieure à l'épaisseur du plateau pour ne pas dépasser du plateau. Le déverrouillage est également simple sans action spécifique à effectuer, puisqu'il suffit de remonter le plateau pour libérer le repliage du cadre.

Enfin, le chariot de manutention comporte quatre roues, notamment deux roues plus grosses que les deux autres qui sont du type roulettes, de préférence les deux grosses roues étant des roues unidirectionnelles qui sont roulantes parallèlement au plan de la ridelle (et donc dans la direction longitudinale du cadre replié sous forme d'un élément longiligne), tandis que les deux autres roues du type roulettes sont pivotantes et de préférence à frein. Les grosses roues, de préférence à surface de roulage en caoutchouc, permettent de rouler sur tout type de surface, notamment sur des surfaces accidentées de chantier, et permettent également de monter aisément une marche ou un trottoir. Avantageusement, les grosses roues sont de diamètre adapté afin de procurer une hauteur d'agencement du cadre à l'arrière d'un véhicule (en particulier à 34 cm par rapport à la surface d'appui des roues) qui permette de charger et décharger des charges aisément.

Dans la suite de la description le terme de « hauteur », les qualificatifs « supérieur », « inférieur », « haut » et « bas », « horizontal » et « vertical », d'un élément du chariot de manutention sont utilisés dans le cadre d'une utilisation normale du chariot, c'est-à-dire relatif à une notion verticale par rapport à un sol horizontal sur lequel est posé le chariot.

La présente invention est maintenant décrite à l'aide d'exemples uniquement illustratifs et nullement limitatifs de la portée de l'invention, et à partir des illustrations jointes, dans lesquelles :
- [Fig. 1] ou figure 1 représente une vue en perspective plongeante d'un exemple de réalisation d'un chariot de manutention selon l'invention, dans son état déployé pour utilisation.
- [Fig. 2] ou figure 2 correspond au chariot de la figure 1 dans son état plié pour le rangement.
- [Fig. 3] ou figure 3 est une vue de face de l'avant du chariot de la figure 1 (état déployé).
- [Fig. 4] ou figure 4 est une vue de face de l'avant du chariot de la figure 2 (état plié).
- [Fig. 5] ou figure 5 illustre une vue de dessus du chariot de la figure 1.
- [Fig. 6] ou figure 6 montre une vue en perspective du chariot pendant l'étape de pliage.
- [[Fig. 7] ou figure 7 est une vue de détail en perspective de l'un des coins du chariot dans son état déployé et verrouillé.

Le chariot de manutention 1 de l'invention illustré sur les figures est notamment destiné à être utilisé pour le transport de charges allongées, telles que des plaques de plâtre, des panneaux, des huisseries de menuiserie, etc.

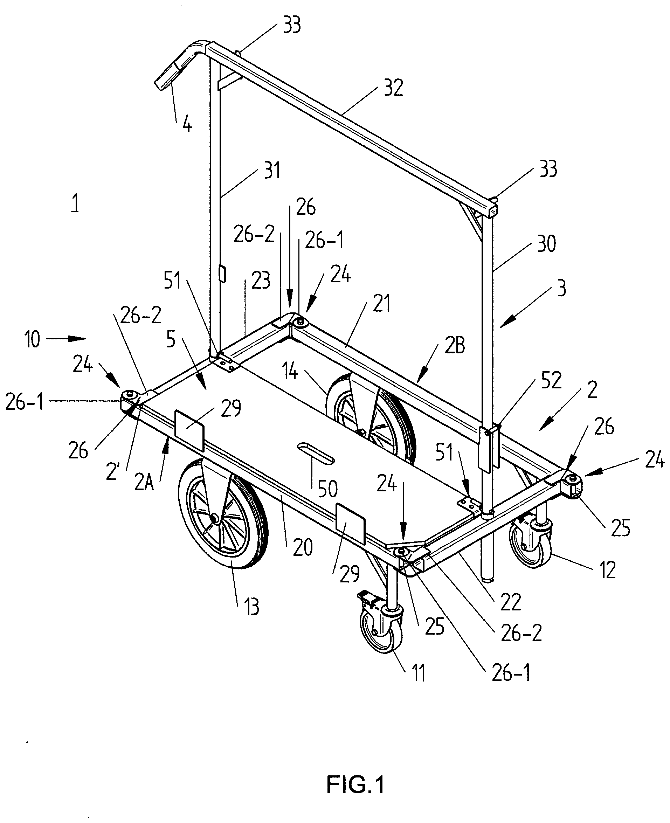

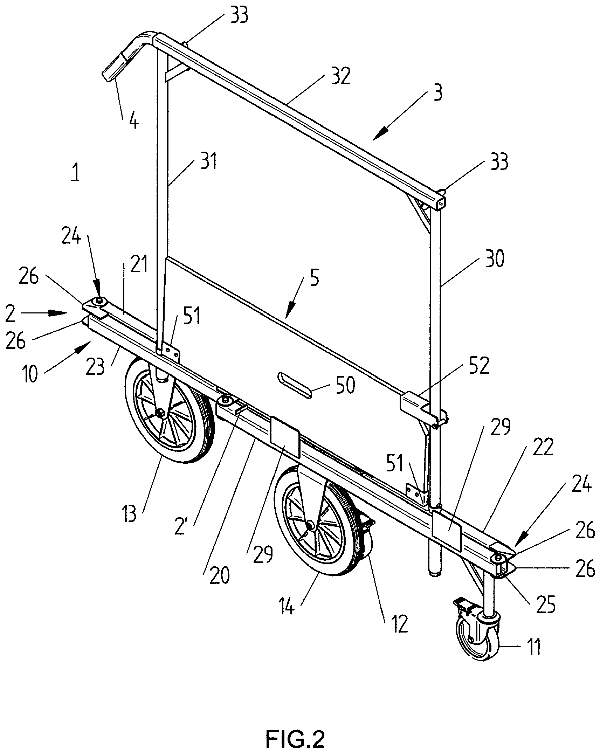

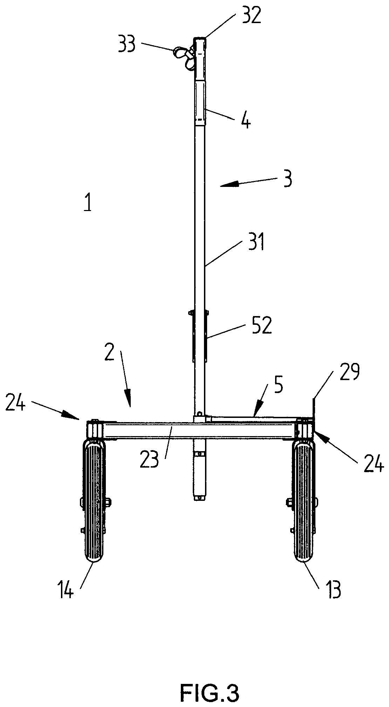

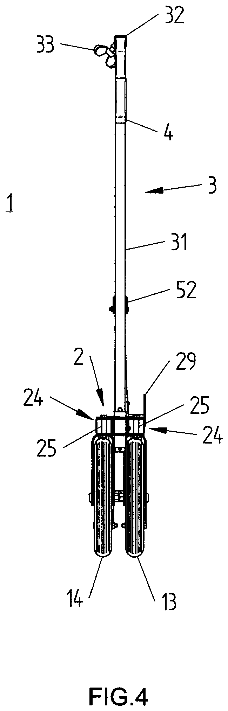

Selon l'invention, le chariot de manutention 1 est apte à adopter deux positions :
- une position d'utilisation telle qu'illustrée sur les figures 1 et 3, pour laquelle le chariot est dans son état totalement déployé, et
- une position de rangement telle qu'illustrée sur les figures 2 et 4, et pour laquelle le chariot est dans son état plié et occupe un volume minimal.

Le chariot de manutention 1 est conçu pour être plié et dépliable en une seule opération, comme il sera expliqué plus loin.

L'exemple nullement limitatif de réalisation du chariot 1 présente les dimensions suivantes :
- Longueur à l'état déployé : 100 cm ;
- Longueur à l'état plié : 155 cm ;
- Largeur à l'état déployé : 59 cm ;
- Largeur à l'état plié, qu'on peut nommer épaisseur, est réduite à : 13,5 cm.

Le chariot 1 comporte un châssis 10 et des roues, de préférence quatre roues 11 à 14. Le châssis 10 comprend un cadre 2 s'étendant dans un plan parallèle au sol, une ridelle 3 solidaire du cadre 2 et s'étendant perpendiculairement au cadre, et au moins un moyen de préhension 4 pour la manoeuvre, telle qu'une poignée, associée à la ridelle 3. Avantageusement, le chariot 1 comporte en outre au moins un plateau 5 qui s'étend au moins en partie sur le cadre 2 en position d'utilisation du chariot, de façon à fournir une surface pleine d'appui.

La structure du châssis 10 est de préférence métallique, telle que ses éléments constitutifs sont de préférence tubulaires. Le plateau 5 est de préférence en bois, en particulier est bakélisé. Le chariot 1 de l'invention présente avantageusement un poids de moins de 20 kg, en particulier de 18 kg, et possède une capacité de charge par exemple de 150 kg.

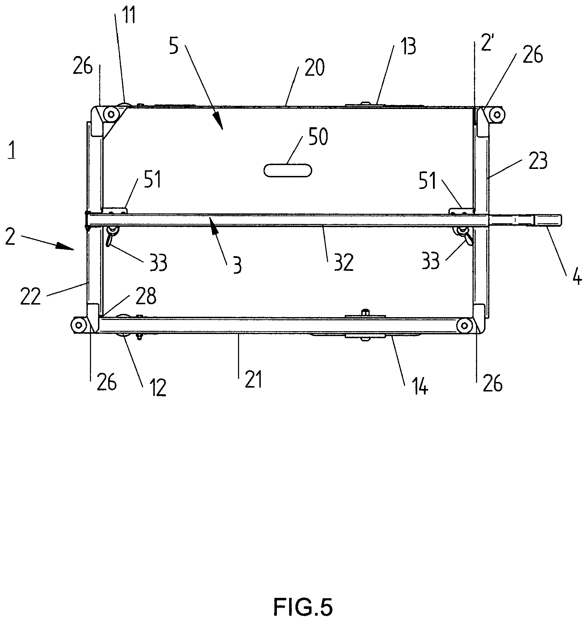

En regard des figures 1 et 5, le cadre 2 est ici de forme rectangulaire. Il présente deux premiers profilés opposés 20 et 21 formant les grands côtés du rectangle et nommés grands profilés, et deux seconds profilés opposés 22 et 23 formant les petits côtés et nommés petits profilés. De préférence, les profilés présentent une section carrée.

Le cadre 2 comporte quatre points d'articulation, en ses quatre coins respectifs. Chaque profilé du cadre est relié à deux profilés adjacents par une articulation respective 24.

Le cadre 2 est repliable sur lui-même de sorte à former une fois replié, un élément longiligne monobloc, tel qu'illustré sur la figure 2, les grands côtés 20 et 21 étant parallèles et en contact l'un contre l'autre, et les petits côtés 22 et 23 étant alors parallèles aux grands côtés, et plus particulièrement alignés chacun, respectivement avec un grand côté.

Le cadre 2 est pliable et déployable dans son plan d'extension. Chacune des articulations 24 comprend un axe 25 qui s'étend dans une direction orthogonale au plan d'extension du cadre, et des moyens de liaison 26 qui sont solidaires de l'axe et de deux profilés adjacents. En position debout et posée du chariot, le plan d'extension du chariot est horizontal tandis que les axes 25 des articulations sont verticaux.

De préférence, les moyens de liaison 26 comportent deux plats opposés en forme de L fixés respectivement aux deux faces opposées inférieure 2A et supérieure 2B de deux profilés adjacents.

De préférence, chaque axe 24 est agencé en l'extrémité distale d'un profilé, selon l'épaisseur dudit profilé et en faisant saillie par ses deux terminaisons libres au niveau des faces inférieure 2A et supérieure 2B, tandis que chaque plat en L 26 présente une aile 26-1 solidaire d'une terminaison de l'axe 24 par boulonnage, et une autre aile 26-2 solidaire de manière fixe du profilé adjacent, par exemple par soudage.

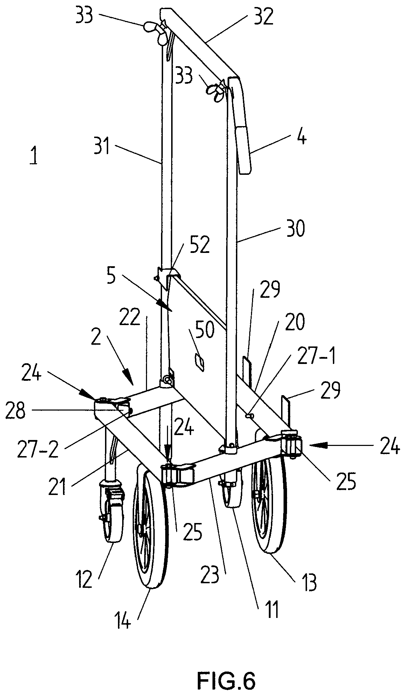

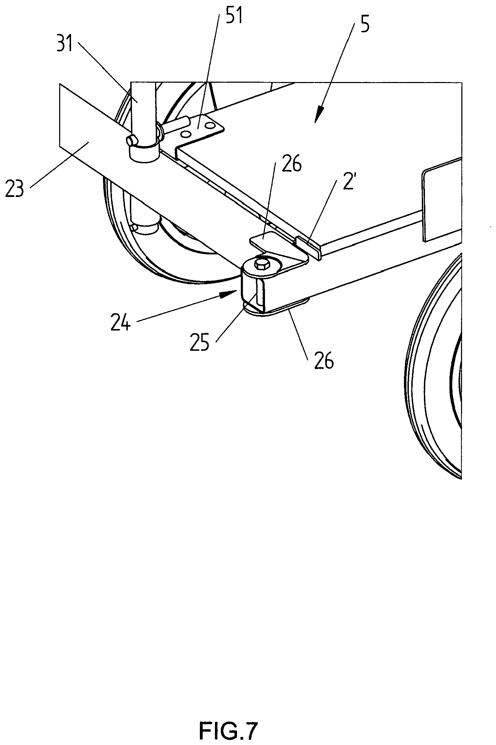

Les quatre profilés/côtés 20 à 23 articulés du cadre 2 permettent, par préhension des grands profilés 20 et 21, et en appuyant/poussant sur l'un d'entre eux dans le plan d'extension du cadre (horizontalement), c'est-à-dire en direction de l'autre profilé qui est maintenu en position fixe, de passer de la position déployée en forme de rectangle (figure 1) à une position de pliage sous la forme d'un losange, comme illustré sur les figures 6 et 7, jusqu'à la position totalement repliée de la figure 2 sous la forme d'un élément ramassé et longiligne. Dans cette dernière configuration (figures 2 et 4), le chariot de manutention 1 est alors extrêmement compact en largeur/épaisseur.

De préférence, le cadre 2 comporte des moyens de verrouillage en position repliée du cadre. Ces moyens de verrouillage consistent par exemple en au moins un pion 27-1 disposée à l'intérieur du cadre et sur l'un des grands profilés 20, et en au moins un orifice 27-2 agencé à l'intérieur du cadre 2, ledit orifice 27-2 étant doté d'un élément élastique de clipsage/déclipsage pour coopérer avec le pion 27-1. L'orifice 27-2 est positionné de manière adaptée pour se trouver en regard du pion 27-1 dans la position repliée du cadre et donc de mise en contact des profilés. Ici, l'orifice 27-2 est positionné en proximité d'un coin, tel que visible sur la figure 6.

De plus, en regard de la figure 6 montrant le cadre dans une position en cours de pliage ou dépliage, le cadre 2 comporte des moyens de butée 28 qui stoppent le dépliage du cadre dans sa position totalement déployée à angle droit (pour ne pas aller plus loin qu'un angle perpendiculaire). Les moyens de butée 28 sont ici constitués d'une pastille en caoutchouc disposée à l'extrémité du petit profilé 22 et destinée à venir en interface contre la face latérale interne du grand profilé adjacent 21 lorsque les deux profilés sont à angle droit.

Pour verrouiller/bloquer le cadre 2 en position dépliée (éviter ainsi que le cadre ne se referme/ne se replie en roulant si par exemple l'une des roues ne se bloque contre un obstacle), le chariot comporte des moyens de verrouillage du cadre 2 en position déployée. Ces moyens de verrouillage (visibles dans la vue de détail de la figure 7) sont de préférence ici constitués de la combinaison, d'une part d'une équerre 2' solidaire du (petit) profilé 23 et s'étendant à la verticale vers le haut (dans un plan perpendiculaire au plan du plateau et en regard du plateau à l'état rabattu), et d'autre part, du plateau 5 dans son état rabattu. L'équerre 2' viendrait en contact du plateau 5 (butterait contre le plateau) en cas de tentative de repliage, ce qui bloquerait tout repliage. L'avantage de cette solution pour les moyens de verrouillage 2', 5 est qu'il n'y a pas d'action spécifique à effectuer pour le verrouillage ou le déverrouillage, le fait de poser ou relever le plateau 5 suffit à respectivement verrouiller ou déverrouiller.

Le cadre 2 constitue une surface d'appui inférieure pour les charges à porter, tandis que la ridelle 3 constitue une surface d'appui latérale pour celles-ci.

Le cadre 2 comporte sur au moins l'un des grands profilés 21, des butées 29, s'étendant parallèlement au profilé et en saillie par rapport à la face supérieure 2B du profilé. Les butées 29 permettent de caler des charges, les charges étant agencées de manière inclinée en appui sur la ridelle 3 et arrêtées par lesdites butées.

La ridelle 3 s'étend dans un plan vertical.,

La ridelle 3 est de préférence agencée dans le plan médian longitudinal du cadre 2. La ridelle 3 est ici à claire-voie. Elle est très simple de géométrie, en se présentant en forme de U renversé. La ridelle 3 comporte deux montants opposés 30 et 31, et une traverse 32 en extrémité supérieure.

Les deux montants 30 et 31 sont fixés aux petits profilés 22 et 23 du cadre 2. Ils sont fixés en rotation sur ces petits profilés 22 et 23 pour accompagner le mouvement de pivotement desdits profilés lors du pliage/déploiement du cadre, les profilés devant passer d'une première position à une autre position à 90°. Les deux montants 30 et 31 sont par exemple tubulaires (de préférence de section ronde) et emboîtés sur deux axes respectifs qui sont solidaires de manière fixe du milieu des petits profilés 22 et 23 du cadre 2. Les montants tubulaires 30 et 31 peuvent ainsi tourner autour de leur axe, pour accompagner le mouvement de pliage du cadre, sans avoir besoin de démonter la ridelle, et donc de démonter ces montants.

La traverse supérieure 32 de la ridelle 3 comporte la poignée de manoeuvre 4. La poignée de manoeuvre 4 est ergonomique et de préférence réversible pour la disposer à l'un ou l'autre bout de la traverse. De préférence, la traverse 32 est tubulaire creuse pour agencer en son intérieur la poignée de manoeuvre 4 qui est de préférence télescopique. La traverse 32 comporte des moyens de blocage 33 pour maintenir en position la poignée de manoeuvre 4.

Afin de supporter des charges qui sont de longueur moindre que celle du cadre (moindre que celle des grands côtés du cadre), le chariot 1 comporte le plateau 5 qui procure lorsque besoin, une surface pleine.

Le plateau 5 est apte à pivoter pour être, soit agencé sur le cadre 2, soit disposé contre la ridelle 3. Le plateau 5 est fixé en partie inférieure des montants 30 et 31 de la ridelle 3, et cela de manière pivotante, par exemple par des charnières 51.

Le plateau 5 peut comporter un évidement oblong 50 servant de poignée pour faciliter la préhension du plateau lorsqu'il est en position posée sur le cadre 2. En outre, cet évidement 50 peut servir de poignée de manutention à l'ensemble du chariot à l'état plié pour faciliter sa manipulation.

La ridelle 3 comporte des moyens d'attache 52 du plateau 5 en position rabattue contre elle. Les moyens d'attache 52 consistent par exemple en un taquet en U. Le taquet 52 est fixé à l'un des montants 31, et pivote pour être positionné (en tombant par gravité) soit verticalement, l'intérieur du U coopérant avec le montant 31 (figure 1), soit horizontalement en coopérant avec le plateau 5 rabattu à la verticale, l'intérieur du U logeant l'épaisseur du plateau.

Enfin, le chariot 1 comporte les roues 11 à 14. Les roues sont fixées à la face inférieure 2A des (grands) profilés 20 et 21 qui sont parallèles au plan de la ridelle 3. Avantageusement, le chariot comporte quatre roues, deux petites roues opposées 11 et 12 du type roulettes, et deux grandes roues opposées 13 et 14. Les petites roues ou roulettes 11 et 12 sont pivotantes et de préférence à frein ; elles sont fixées de manière opposée à l'une des extrémités du cadre 2. Les grandes roues 13 et 14 sont par exemple du double du diamètre des roulettes 11 et 12. Les grandes roues 13 et 14 sont unidirectionnelles. De préférence, les grandes roues 13 et 14 sont en élastomère pour faciliter le roulage sur des surfaces accidentées. De plus, les grandes roues 13 et 14 sont fixées aux grands profilés 20 et 21 du cadre 2 en étant, non pas agencées à l'autre extrémité des profilés, mais disposées davantage vers le milieu des profilés, ce qui aide au basculement du chariot pour franchir des marches ou un trottoir.

Les roues, ici les grandes roues 13 et 14, sont dimensionnées pour agencer le cadre 2 à une hauteur d'environ 30 cm, en particulier 34 cm, pour faciliter le chargement et le déchargement à l'arrière d'un véhicule, et franchir des trottoirs ou des marches sur un chantier.

La mise en oeuvre du chariot de manutention 1 de l'invention est la suivante.

Pour plier le chariot dans son état de rangement (figure 2) à partir de son état déployé (figure 1), l'opérateur se saisit dans chaque main des grands profilés respectifs 20 et 21. Il maintient en position fixe l'une de ses mains et donc l'un des grands profilés, tandis qu'il pousse avec son autre main sur l'autre profilé en direction de la main fixe, de façon à rapprocher ledit autre grand profilé vers le grand profilé opposé, initiant ainsi le pivotement du cadre 2 (figure 6) et son repliage sur lui-même. En poursuivant l'opération de poussée (figure 7), le cadre 2 continue de se replier à la manière d'un losange. L'opération de poussée se termine lorsque le cadre 2 parvient à la forme de l'élément longiligne de la figure 2. Le verrouillage en position repliée du cadre s'effectue par la coopération du pion 27-1 dans l'orifice de clipsage 27-2 visible sur la figure 1.

Pour redéployer le cadre 2 qui se trouve sous la forme de l'élément longiligne de la figure 2, l'opérateur se saisit à nouveau des grands profilés 20 et 21 et tire sur ces profilés vers l'extérieur et dans un plan horizontal. Le cadre 2 se redéploye en passant par la position de la figure 6, jusqu'à parvenir à son ouverture totale illustrée en figure 1. Le blocage dans son ouverture maximale est obtenu par la coopération de la pastille en caoutchouc 28 qui vient s'appliquer à l'interface du petit profilé 22 et du grand profilé adjacent 21.

## Revendications

1. Chariot de manutention (1) apte à être déplacé manuellement, en particulier conçu pour le transport de charges allongées telles que des charges sous la forme de plaques, le chariot comportant un cadre inférieur de support (2), des roues (11, 12, 13, 14), et au moins une ridelle (3), le cadre (2) étant conçu pour être repliable sur lui-même et dépliable, de façon à adopter à l'état replié une forme longiligne, et à l'état déployé sa forme de cadre, **caractérisé en ce que** le cadre (2) comporte quatre profilés (20, 21, 22, 23) formant quatre côtés et un parallélépipède à angles droits, chaque profilé étant articulé par rapport à deux profilés, et la ridelle (3) est solidaire du cadre (2) en étant agencée selon un plan médian du cadre dans la position déployée de ce dernier, et **en ce que** le cadre (2) est repliable sur lui-même de sorte qu'en position repliée, chaque paire de deux profilés (20, 23 ; 21, 22) adjacents agencés en L à l'état déplié du cadre, présente ses deux profilés (20, 23) qui sont alignés en position repliée du cadre et sont parallèles et en contact des deux autres profilés (21, 22) alignés de l'autre paire de profilés.

2. Chariot de manutention selon la revendication précédente, **caractérisé en ce que** le cadre (2) est de forme polygonale et comporte des moyens d'articulation (24) en chacun des angles de deux côtés consécutifs, en particulier, les moyens d'articulation sont des moyens d'articulation par pivotement autour d'axes de direction orthogonale au plan d'extension du cadre.

3. Chariot de manutention selon l'une quelconque des revendications précédentes, **caractérisé en ce que** la ridelle (3) est à claire-voie.

4. Chariot de manutention selon l'une quelconque des revendications précédentes, **caractérisé en ce que** la ridelle (3) comporte deux montants (30, 31) opposés qui s'étendent orthogonalement au plan du cadre (2) et sont fixés au cadre en étant chacun, apte à tourner dans son plan d'extension et autour d'un point de rotation solidaire du cadre.

5. Chariot de manutention selon l'une quelconque des revendications précédentes, **caractérisé en ce qu'**il comporte au moins un plateau (5) qui est apte à obturer au moins en partie le cadre (2), de préférence le plateau (5) comporte au moins un évidement de préhension (50).

6. Chariot de manutention selon la revendication précédente, **caractérisé en ce que** le plateau (5) est articulé par deux charnières (51) fixées à la ridelle (3) et est apte à être rabattu parallèlement et contre la ridelle, la ridelle (3) comportant un système de maintien (52) du plateau en position rabattue contre la ridelle.

7. Chariot de manutention selon la revendication précédente, **caractérisé en ce que** les moyens d'attache (52) consistent en un taquet en U qui est apte à pivoter pour être positionné soit verticalement en tombant par gravité, soit horizontalement en coopérant avec le plateau (5) rabattu à la verticale, l'intérieur du U logeant l'épaisseur du plateau.

8. Chariot de manutention selon l'une quelconque des revendications précédentes, **caractérisé en ce que** la ridelle (3) comporte des moyens de préhension pour la manoeuvre du chariot, tels qu'au moins une poignée de manoeuvre (4) qui peut être réversible et/ou télescopique.

9. Chariot de manutention selon l'une quelconque des revendications précédentes, **caractérisé en ce que** le cadre (2) comporte des moyens de calage (29) parallèlement au plan de la ridelle (3) et à l'opposé de celle-ci.

10. Chariot de manutention selon l'une quelconque des revendications précédentes, **caractérisé en ce que** le cadre (2) comporte des moyens de verrouillage (27-1, 27-2) pour le maintenir en position repliée, en particulier les moyens de verrouillage comportent au moins un pion (27-1) agencé à l'intérieur du cadre, et au moins un orifice (27-2) doté d'un élément élastique de clipsage/déclipsage pour coopérer avec le pion (27-1), l'orifice étant situé à l'intérieur du cadre de manière adaptée pour sa coopération avec le pion dans la position repliée du cadre.

11. Chariot de manutention selon l'une quelconque des revendications précédentes, **caractérisé en ce qu'**il comporte des moyens de butée (28) pour arrêter le cadre dans une ouverture de déploiement appropriée à l'utilisation.

12. Chariot de manutention selon la revendication précédente, **caractérisé en ce que** les moyens de butée (28) sont une pastille en caoutchouc qui est disposée en l'extrémité de l'un des profilés et qui coopère en interface avec le profilé adjacent selon une ouverture maximale de déploiement du cadre.

13. Chariot de manutention selon l'une quelconque des revendications précédentes, **caractérisé en ce qu'**il comporte des moyens de blocage (2') du cadre en position déployée, en particulier lesdits moyens de blocage (2') comportent une équerre ou un plat soudé s'étendant perpendiculairement au plan du cadre (5) et perpendiculairement à la direction longitudinale du cadre, l'équerre (2') étant apte à coopérer par butée avec le plateau (5) en position rabattue du plateau lors d'une tentative de repliage du cadre alors que le plateau est rabattu.

14. Chariot de manutention selon l'une quelconque des revendications précédentes, **caractérisé en ce que** le cadre (2) est d'une part repliable sur lui-même, et d'autre part dépliable, à chaque fois en une unique opération.

15. Chariot de manutention selon l'une quelconque des revendications précédentes, **caractérisé en ce qu'**il comporte quatre roues (11, 12, 13, 14), notamment deux roues (13, 14) plus grosses que les deux autres (11, 12) qui sont du type roulettes, de préférence les deux grosses roues (13, 14) étant des roues unidirectionnelles qui sont roulantes parallèlement au plan de la ridelle (3), tandis que les deux autres roues du type roulettes (11, 12) sont pivotantes et de préférence à frein.

## Patentansprüche

1. Transportwagen (1), der von Hand bewegt werden kann und insbesondere für den Transport von länglichen Lasten wie z. B. Lasten in Form von Platten ausgelegt ist, wobei der Transportwagen einen unteren Tragrahmen (2), Räder (11, 12, 13, 14) und mindestens eine Bordwand (3) aufweist, **dadurch gekennzeichnet, dass** der Rahmen (2) so ausgelegt ist, dass er in sich selbst zusammenklappbar und auseinanderklappbar ist, so dass er im zusammengeklappten Zustand eine längliche Form und im auseinandergeklappten Zustand seine Rahmenform annimmt.

2. Transportwagen nach Anspruch 1, **dadurch gekennzeichnet, dass** der Rahmen (2) Profile (20, 21, 22, 23) umfasst, die miteinander verbunden sind, um den Umriss des Rahmens zu begrenzen, wobei jedes Profil in Bezug auf zwei benachbarte Profile gelenkig ist, um das Zusammen- und Auseinanderklappen zu gewährleisten, und dass die Profile (20, 21, 22, 23) im zusammengeklappten Zustand des Rahmens parallel zueinander verlaufen und sich gegenseitig berühren.

3. Transportwagen nach dem vorhergehenden Anspruch, **dadurch gekennzeichnet, dass** der Rahmen (2) vier Profile (20, 21, 22, 23) umfasst, die vier Seiten und ein Parallelepiped mit rechten Winkeln bilden, und in sich selbst zusammenklappbar ist, so dass im zusammengeklappten Zustand jedes Paar von zwei Profilen (20, 23 ; 21, 22), die im aufgeklappten Zustand des Rahmens L-förmig angeordnet sind, seine beiden Profile (20, 23), die in der zusammengeklappten Position des Rahmens bündig ausgerichtet sind und parallel zu und in Kontakt mit den beiden anderen bündig ausgerichteten Profilen (21, 22) des anderen Paars von Profilen sind.

4. Transportwagen nach einem der vorhergehenden Ansprüche, **dadurch gekennzeichnet, dass** der Rahmen (2) polygonal geformt ist und Gelenkmittel (24) an jeder der Ecken zweier aufeinanderfolgender Seiten aufweist, insbesondere sind die Gelenkmittel Schwenkmittel um Achsen, deren Richtung orthogonal zur Erstreckungsebene des Rahmens verläuft.

5. Transportwagen nach einem der vorhergehenden Ansprüche, **dadurch gekennzeichnet, dass** die Bordwand (3), vorzugsweise eine Gitterwand, fest mit dem Rahmen verbunden ist, indem sie in der auseinandergeklappten Position des Rahmens in einer Mittelebene des Rahmens angeordnet ist.

6. Transportwagen nach einem der vorhergehenden Ansprüche, **dadurch gekennzeichnet, dass** die Bordwand (3) zwei gegenüberliegende Stützen (30, 31) umfasst, die sich orthogonal zur Ebene des Rahmens (2) erstrecken und am Rahmen befestigt sind, indem sie jeweils in seiner Erstreckungsebene und um einen fest mit dem Rahmen verbundenen Drehpunkt drehbar sind.

7. Transportwagen nach einem der vorhergehenden Ansprüche, **dadurch gekennzeichnet, dass** er mindestens eine Platte (5) aufweist, die geeignet ist, den Rahmen (2) zumindest teilweise zu schließen, wobei die Platte (5) vorzugsweise mindestens ein Greifloch (50) aufweist.

8. Transportwagen nach dem vorhergehenden Anspruch, **dadurch gekennzeichnet, dass** die Platte (5) durch zwei an der Bordwand (3) befestigte Scharniere (51) gelenkig verbunden ist und parallel und gegen die Bordwand heruntergeklappt werden kann, wobei die Bordwand (3) ein System (52) zum Halten der Platte in der gegen die Bordwand heruntergeklappten Position aufweist.

9. Transportwagen nach einem der vorhergehenden Ansprüche, **dadurch gekennzeichnet, dass** die Bordwand (3) Greifmittel zum Manövrieren des Transportwagens aufweist, wie z. B. mindestens einen Manövriergriff (4), der umkehrbar und/oder teleskopierbar sein kann.

10. Transportwagen nach einem der vorhergehenden Ansprüche, **dadurch gekennzeichnet, dass** der Rahmen (2) Klemmmittel (29) parallel zur Ebene der Bordwand (3) und gegenüber der Bordwand aufweist.

11. Transportwagen nach einem der vorhergehenden Ansprüche, **dadurch gekennzeichnet, dass** der Rahmen (2) Verriegelungsmittel (27-1, 27-2) aufweist, um ihn in der zusammengeklappten Position zu halten, wobei die Verriegelungsmittel insbesondere mindestens einen Stift (27-1) aufweisen, der im Inneren des Rahmens angeordnet ist, und mindestens eine Öffnung (27-2), die mit einem elastischen Einrast-/Ausrastelement versehen ist, um mit dem Stift (27-1) zusammenzuwirken, wobei die Öffnung im Inneren des Rahmens in einer Weise angeordnet ist, die für ihr Zusammenwirken mit dem Stift in der zusammengeklappten Position des Rahmens geeignet ist.

12. Transportwagen nach einem der vorhergehenden Ansprüche, **dadurch gekennzeichnet, dass** er Anschlagmittel (28) zum Sichern des Rahmens in einer für den Gebrauch geeigneten Bereitstellungsöffnung aufweist.

13. Transportwagen nach einem der vorhergehenden Ansprüche, **dadurch gekennzeichnet, dass** er Mittel (2') zur Blockierung des Rahmens in der ausgeklappten Position umfasst, wobei insbesondere die Blockierungsmittel (2') ein Winkelstück oder eine geschweißte Platte umfassen, die sich senkrecht zur Ebene des Rahmens (5) und senkrecht zur Längsrichtung des Rahmens erstreckt, wobei das Winkelstück (2') geeignet ist, in der heruntergeklappten Position der Platte durch Anschlag mit der Platte (5) zusammenzuwirken, wenn versucht wird, den Rahmen zusammenzuklappen, während die Platte heruntergeklappt ist.

14. Transportwagen nach einem der vorhergehenden Ansprüche, **dadurch gekennzeichnet, dass** der Rahmen (2) einerseits in sich selbst zusammenklappbar und andererseits auseinanderklappbar ist, jeweils in einem einzigen Arbeitsgang.

15. Transportwagen nach einem der vorhergehenden Ansprüche, **dadurch gekennzeichnet, dass** er vier Räder (11, 12, 13, 14) aufweist, insbesondere zwei Räder (13, 14), die größer sind als die beiden anderen (11, 12), die vom Typ Rollen sind, wobei vorzugsweise die beiden großen Räder (13, 14) unidirektionale Laufräder sind, die parallel zur Ebene der Bordwand (3) laufen, während die beiden anderen Räder vom Typ Rollen (11, 12) schwenkbar und vorzugsweise mit Bremse sind.

## Claims

1. A handling truck (1) capable of being moved by hand, in particular designed for transporting long loads such as loads in the form of boards, wherein the truck comprises a lower support frame (2), wheels (11, 12, 13, 14) and at least one rack (3), **characterised in that** the frame (2) is designed to be folded on itself and unfolded, so as to have a long shape when folded, and its frame shape when unfolded.

2. A handling truck according to claim 1, **characterised in that** the frame (2) comprises sections (20, 21, 22, 23) assembled to each other to demarcate the contour of the frame, wherein each section is articulated in relation to the two adjacent sections to allow folding and unfolding, and **in that** the sections (20, 21, 22, 23) are parallel to and in contact with each other when the frame is folded.

3. A handling truck according to the foregoing claim, **characterised in that** the frame (2) comprises four sections (20, 21, 22, 23) forming four sides and a right-angled parallelepiped, and can fold on itself so that in the folded position, each pair of two adjacent sections (20, 23; 21, 22) arranged in an L shape when the frame is unfolded, presents its two sections (20, 23) which are aligned when the frame is in the folded position and are parallel to and in contact with the other two aligned sections (21, 22) of the other pair of sections.

4. A handling truck according to any of the foregoing claims, **characterised in that** the frame (2) is polygonal in shape and comprises articulation means (24) at each angle of two consecutive sides; in particular, the articulation means are articulation means that pivot around axes in a direction orthogonal to the extension plane of the frame.

5. A handling truck according to any of the foregoing claims, **characterised in that** the rack (3), preferably of the open type, is integral with the frame and is arranged in a median plane of the frame when the frame is in the unfolded position.

6. A handling truck according to any of the foregoing claims, **characterised in that** the rack (3) comprises two opposing uprights (30, 31) that extend orthogonally to the plane of the frame (2) and are fastened to the frame so that each of them is capable of rotating in its extension plane around a rotation point integral with the frame.

7. A handling truck according to any of the foregoing claims, **characterised in that** it comprises at least one deck (5) which is capable of shutting at least part of the frame (2), preferably the deck (5) comprises at least one gripping slot (50).

8. A handling truck according to the foregoing claim, **characterised in that** the deck (5) is articulated by two hinges (51) fastened to the rack (3) and is capable of being folded parallel to and against the rack, wherein the rack (3) comprises a system (52) for holding the deck in the folded position against the rack.

9. A handling truck according to any of the foregoing claims, **characterised in that** the rack (3) comprises gripping means for manoeuvring the truck, such as at least one manoeuvring handle (4) which may be reversible and/or telescopic.

10. A handling truck according to any of the foregoing claims, **characterised in that** the frame (2) comprises means (29) for blocking parallel to the plane of the rack (3) and opposite the rack.

11. A handling truck according to any of the foregoing claims, **characterised in that** the frame (2) comprises locking means (27-1, 27-2) for holding it in the folded position, in particular, the locking means comprise at least one pin (27-1) arranged inside the frame, and at least one hole (27-2) with an elastic clipping/unclipping element to cooperate with the pin (27-1), wherein the hole is located inside the frame in a manner that is suited for its cooperation with the pin when the frame is in the folded position.

12. A handling truck according to any of the foregoing claims, **characterised in that** it comprises stopping means (28) to stop the frame in an unfolding opening appropriate for its use.

13. A handling truck according to any of the foregoing claims, **characterised in that** it comprises means (2') for locking the frame in the unfolded position, in particular, said locking means (2') comprise a bracket or welded flat extending perpendicular to the plane of the frame (5) and perpendicular to the longitudinal direction of the frame, wherein the bracket (2') is capable of cooperating by stopping with the deck (5) when the deck is in the folded position during an attempt to fold the frame when the deck is folded.

14. A handling truck according to any of the foregoing claims, **characterised in that** the frame (2) can firstly be folded on itself and secondly be unfolded, every time in a single operation.

15. A handling truck according to any of the foregoing claims, **characterised in that** it comprises four wheels (11, 12, 13, 14), particularly two wheels (13, 14) that are larger than the other two (11, 12), which are of the castor type, wherein the two larger wheels (13, 14) are preferably unidirectional and roll parallel to the plane of the rack (3), whereas the two other wheels of the castor type (11, 12) are swivelling and preferably of the locking type.
